# EUROPEAN PATENT SPECIFICATION

(11) **EP 3 295 003 B1**
(45) Date of publication and mention of the grant of the patent: **17.11.2021**
(21) Application number: 15725691.8
(22) Date of filing: 12.05.2015
(51) Int. Cl.: F02B 23/00, F02D 19/02, F02D 19/10, F02F 3/00, F02B 23/06

(54) **A PISTON FOR A FOUR-STROKE INTERNAL COMBUSTION ENGINE AND A FOUR-STROKE INTERNAL COMBUSTION ENGINE**
KOLBEN FÜR EINEN VIERTAKTVERBRENNUNGSMOTOR UND VIERTAKTVERBRENNUNGSMOTOR
PISTON POUR MOTEUR À COMBUSTION INTERNE À QUATRE TEMPS ET MOTEUR À COMBUSTION INTERNE À QUATRE TEMPS

(43) Date of publication of application: 21.03.2018
(73) Proprietor: Wärtsilä Finland Oy, 65100 Vaasa (FI)
(72) Inventor: NURMI, Hannu, 65100 Vaasa (FI)
(74) Representative: Genip Oy
(86) International application number: PCT/FI2015/050316
(87) International publication number: WO 2016/181017

(56) References cited:
- AT-B- 399 917
- DE-A1- 2 620 910
- DE-A1- 19 739 449
- FR-A- 1 587 925
- US-A- 1 783 054
- US-A- 2 214 891
- Heywood: "Internal combustion engines fundamentals" In: "INTERNAL COMBUSTION ENGINE FUNDAMENTALS.", 1 January 1988 (1988-01-01), NEW YORK, MCGRAW-HILL., US 022039, XP055538019, ISBN: 978-0-07-100499-2 pages 567-572,

## Description

### Technical field

The present invention relates to a piston for a large four-stroke internal combustion engine in accordance with the preamble of claim 1 and a large four-stroke internal combustion engine in accordance with the preamble of claim 7. The present invention is applicable to all four stage internal combustion dual fuel engines or four stage internal combustion single fuel engines using the Otto cycle. Thus the engines of the present invention use at least gaseous fuel, and in dual fuel applications also liquid fuel. In the Otto process the fuel may be ignited by either spark, laser or pilot fuel.

### Background art

Large internal combustion engines are widely used in demanding power supply tasks in electric power plants, as a power source of ship propulsion systems, etc.

In large internal combustion engines there is an ever-increasing demand for more power with reduced fuel consumption. Thus, on the one hand, an aim is to increase the power rate and simultaneously decrease emissions caused by the engine. A first step towards these results is the use of an engine applying the four-stroke combustion cycle, as the power rate of such engines is higher and the emissions lower than those applying the two-stroke combustion cycle. A second step is to increase the mean effective pressure in the cylinders of the engine, which, naturally, leads to increased peak cylinder pressure and thereby to higher mechanical stresses subjected to the piston as well as to the cylinder head and head bolts. And a third step is to keep the weight of the moving parts as low as possible in order to reduce internal mass forces of the engine, which sets high demands for both material and constructional properties of the engine and, in particular, for those of the piston. However, it has to be kept in mind that this kind of large engines are used in such applications that the reliability of the engines may not be sacrificed, whereby the improvements leading to the increase in the mean effective pressure and/or in the decrease in the weight of engine components, which both increase the relative load to various parts of the engine have to be made with utmost care. This results in need for reconsidering, developing and updating all parts of these engines, pistons included, to absorb safely the increasing loads.

Especially the ability to withstand fatigue at elevated power rates of the four-stroke internal combustion engine is one objective of the present invention. While having a challenging technical task of developing a piston for these increased demands, also the economical aspect of the piston production needs to be taken into account. A piston, as any other component of an engine, is preferably manufactured in such a way that the unit price of a piston is maintained as low as possible. Therefore a proper balance between manufacturing costs and technical excellence has to be found. The main operative target of a piston may not be forgotten, i.e. the piston should be capable of working over the specified life time of the engine without any problems.

When aiming at economical production of pistons, it has been common practice to manufacture so called composite pistons for large four-stroke internal combustion engines. In other words, the pistons comprise two parts, a top part, so called piston crown, and a bottom or body part, so called piston skirt. For years, the outstanding piston concept for highly rated large combustion engines has been a rigid composite piston with a steel crown and nodular cast-iron or forged steel skirt. Now that the crown and the skirt are separate parts they may be manufactured of materials most suitable for their operating conditions. In other words, as the crown is subjected directly to both thermal and pressure loads and as the combustion bowl surface is in close communication with the combustion chamber the requirements are quite different from those of the skirt, which is a member transferring the power from the crown to the gudgeon pin and to the connecting rod. A further advantage of this composite piston construction is the possibility of adjusting the compression ratio of the cylinder by changing the height of the piston crown.

The piston crown and the piston skirt are fastened to one another by means of two or more screws or by means of a bolt and a nut. The piston crown has a top surface delimiting the combustion chamber, i.e. facing the intake and exhaust valves and the fuel injector/s. The at least substantially cylindrical side surface of the piston crown is provided with a number of grooves for piston rings. The piston rings seal the gap between the piston and the inner wall of the cylinder, whereby the piston rings prevent the combustion pressure from escaping from the combustion chamber and scrape excess lubricant from the cylinder wall.

The top surface of the piston has had, during the last century, an innumerous amount of configurations or shapes starting from a completely flat planar surface to deep combustion cavities within the piston crown, and to dome shaped slightly protruding surfaces. Additionally, the top surface of the piston has sometimes been provided with shaped depressions or pockets for the valves. Furthermore, very often one of the dominant factors in shaping the top surface of the piston has been the desire to control the combustion process in the combustion chamber.

DE-A1-197 39 449 discusses a way to avoid complicated shaping of the piston skirt and the piston crown in a three-part constructed piston in which the lower part and the skirt are connected in the manner of an articulated piston only by the piston pin. For this purpose, the skirt has a guide for the piston base at its upper end, at least in the pressure - counter pressure direction.

US-2, 214,891 discloses a combustion engine piston formed of a skirt and a crown such that the crown is attached to the upper end of the skirt by means of a single nut screwed onto central threaded part of the crown.

AT-B-399 917 discloses a combustion engine piston formed of a piston crown and a piston skirt to which the crown is fastened by means of bolts. The piston crown has a central part extending above the edge areas of the crown.

US-1,783,054 discloses another combustion engine piston formed of a piston crown and a piston skirt to which the crown is fastened by means of bolts. The piston crown has a central part extending above the edge areas of the crown.

FR-1,587,925 discloses yet another combustion engine piston formed of a piston crown and a piston skirt to which the crown is fastened by means of bolts. The piston crown has a central part extending above the edge areas of the crown.

DE-A1-26 20 910 discloses a combustion engine piston formed of a piston crown and a piston skirt to which the crown is fastened by means of bolts. The piston crown has a central part having a reduced height, i.e. the central part extending below the edge areas of the crown.

EP-A2-1 561 924 discloses a combustion engine piston formed of a piston crown and a piston skirt to which the crown is fastened by means of bolts. The piston crown has a central part having a reduced height, i.e. the central part extending below the edge areas of the crown.

Lately, it has been discovered that a good compromise between two pistons, i.e. a highly shaped piston, which is, thus, expensive to manufacture, and a simple "flat-head" piston with low manufacturing costs, is a piston with a slightly shaped top surface of the crown, i.e. one having, in a cross-sectional side view, a wavy top surface as illustrated in Figure 1. Such a piston has been discussed, for instance, in WO-A1-2013182732. A characterizing feature of this prior art piston is that the annular edge area and the centre of the top surface of the piston are substantially at the same level. The annular area of the top surface in between the edge area and the centre is somewhat depressed, i.e. it is below the level of the edge area. The annular depressed area is oftentimes called a bowl or bowl area. It has been learned that the combustion proceeds well in the combustion chamber delimited between such a "wavy" top surface of the piston crown and the cylinder head.

However, it has also been learned that high ignition pressure and high temperature increase the stresses subjected to the piston crown, whereby the top surface design has to be considered carefully. Performed experiments have shown that raising the centre area of the top surface of the piston crown increases the strength and fatigue resistance of the piston crown and, thus, allows the use of higher peak cylinder pressures.

A further feature that has to be taken into account in piston design is the emissions the combustion process produces. A factor directly proportional to HC-emissions of an engine is the height or thickness of the top land of the piston, i.e. the distance between the uppermost piston ring groove and the edge area of the top surface of the piston crown. In other words, the higher or thicker the top land is, the higher are the HC- emissions. Performed experiments have taught that positioning of the uppermost piston ring groove depends on the combustion process in the combustion chamber. In other words, the more heat is subjected to the edge area of the piston the farther from the edge area the uppermost groove should be located. Accordingly, when testing the piston of the present invention, it was learned that by properly designing both the centre area and the bowl area such that the combustion flame is directed away from the gap between the piston and the cylinder wall the top land height may be reduced.

Thus, the following four facts have to be taken into consideration when designing a piston, 1) the bowl is needed at the top surface of the piston crown to create a turbulence and flame direction favourable in view of the combustion process, 2) the piston crown itself should be as short or low as possible to minimize piston length and weight, 3) the top of the piston crown has to endure high ignition pressures and fatigue stresses, and 4) the height or the thickness of the top land has to be optimized in view of reducing the HC- emissions.

The above facts are taken into account by raising the centre area of the top surface of the piston crown and by providing the top surface of the piston with suitably dimensioned bowl area, whereby the top land height may be reduced significantly when compared to prior art pistons.

An object of the present invention is to improve the efficiency of the engine by reducing the power consumed by internal processes of the engine.

Another object of the present invention is to reduce the manufacturing costs and simplify the engine design, which also has a positive effect on the fatigue resistance of the piston assembly, gudgeon pin or the connecting rod.

Yet another object of the present invention is to redesign the top surface of the piston crown to meet the requirements set for the fatigue and cooling properties of the piston crown as well as those set for shape and dimensional factors of both the piston and the piston crown in such a manner that also the HC- emissions of the engine are lowered.

### Disclosure of the Invention

At least one of the objects of the present invention is substantially met by a piston for a large four-stroke internal combustion engine, the piston is formed of a piston crown and a piston skirt fastened to one another; the piston crown having exactly three grooves for piston rings in its outer circumference including a groove for an uppermost piston ring, a top surface and a diameter Dp; the top surface having a centre area, a depressed bowl area and an edge area at a level Le; the level Le being a reference level at right angles to the longitudinal axis X of the piston; the depressed bowl area having a bottom below the level Le of the edge area, the centre area is a raised center area extending above the edge area at a distance Hc from the reference level Le, the piston crown further having a top land between the groove for the uppermost piston ring and the level Le of the edge area, wherein the top land having a thickness HI between the groove for the uppermost piston ring and level Le of the edge area, the thickness HI being 3 - 10 % of the diameter Dp.

The four-stroke internal combustion engine in accordance with the present invention has the following advantages compared to corresponding prior art engines:
- the piston construction is more reliable than that in prior art engines,
- the piston endures higher mechanical and thermal stresses than that of prior art engines,
- lower HC- emissions without compromise of cooling and piston strength, and
- overall improved performance of the engine.

### Brief Description of Drawings

In the following, the four-stroke internal combustion engine of the present invention and the piston therefor will be described with reference to the accompanying exemplary, schematic drawings, in which
Figure 1 illustrates schematically a cross section of a prior art four-stroke internal combustion engine,
Figure 2 illustrates schematically a cross section of a four-stroke internal combustion engine in accordance with a preferred embodiment of the present invention, and
Figure 3 illustrates a partial cross-section of a piston of a four-stroke internal combustion engine in accordance with a preferred embodiment of the present invention, the cross-section being taken along the longitudinal axis X of the piston.

### Detailed Description of Drawings

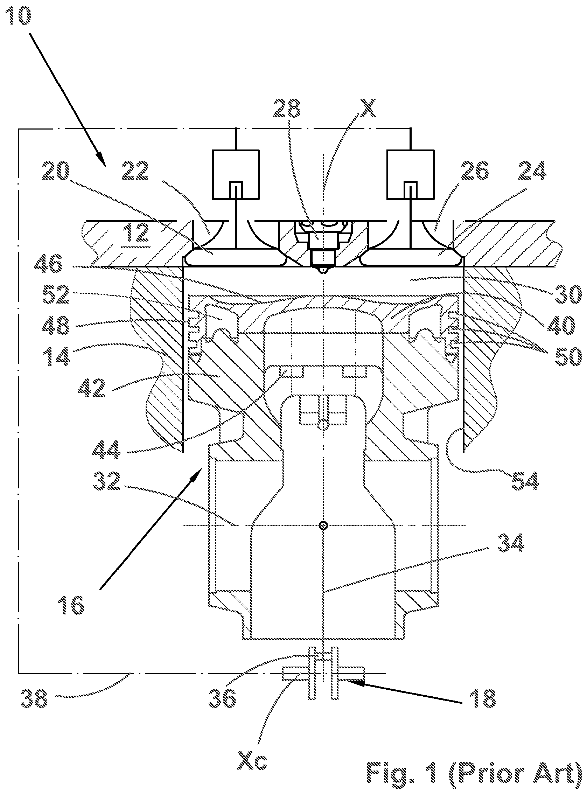

Figure 1 illustrates a cross-section of a prior art four-stroke internal combustion engine 10, the cross-section being taken along a plane defined by the longitudinal axis X of the cylinder and the axis Xc of the crankshaft. The engine 10 has at least one cylinder head 12, which is here shown schematically, at least one cylinder 14 (partially cut) at the cylinder block (not shown), a piston 16 in each cylinder 14, and a crankshaft 18 arranged on bearings at the cylinder block. The cylinder head 12 comprises at least one intake valve 20 with an intake channel 22 and at least one exhaust valve 24 with an exhaust channel 26, and at least one fuel injector 28, in case the engine is such that the fuel is injected into the cylinder, more closely to the combustion chamber 30 between the cylinder head 12 and the piston 16. The fuel injector 28 is used in engines in the compression chamber of which either primary or pilot fuel is injected, like for instance dual fuel engines or gas engines using pilot fuel for igniting the air-fuel mixture. In place of the fuel injector there may be arranged means for igniting the air-fuel mixture in the combustion chamber, like for instance a spark plug, a glow plug, a pre-chamber or some other appropriate means. The piston 16 has a gudgeon pin schematically illustrated by its axis 32, the gudgeon pin 32 being coupled to a crankpin 36 of the crankshaft 18 by means of a connecting rod (shown schematically by a line 34). The valves 20 and 24 are operated as a function of the rotational position of the crankshaft 18 as illustrated by a dotted line 38, i.e. for instance with the aid of a camshaft (not shown).

The pistons 16 of large four-stroke internal combustion engines have been made of two parts, i.e. a so called piston crown 40, and a piston skirt 42, the parts being fastened to one another, for instance by means of two or more screws 44. Another way of attaching the piston crown to the piston skirt is to provide the surface of the piston crown opposite the combustion chamber with a central bolt that extends through an opening at the top of the piston skirt so that the piston skirt and the piston crown may be fastened to one another by a nut threaded on the bolt from inside the piston skirt. The piston crown 40 has a top surface 46 delimiting the combustion chamber 30, i.e. facing the intake and exhaust valves 20 and 24 and the fuel injector/s 28, together with the cylinder head 12. The at least substantially cylindrical side surface 48 of the piston crown 40 is provided with a number of grooves 50 for piston rings (not shown) and a cooling gallery 52 positioned in both the piston crown and the piston skirt. The piston rings seal the gap between the piston 16 and the inner wall 54 of the cylinder 14, for preventing the combustion pressure from escaping from the combustion chamber 30 and for scraping lubricant from the cylinder wall 54.

However, when the desire of lowering the HC- emissions of the engine are combined with the requirements high ignition or peak cylinder pressure sets for the construction of the piston crown and the somewhat contrary desires for the short length or small thickness of the crown it has been considered that the crown needs to be redesigned.

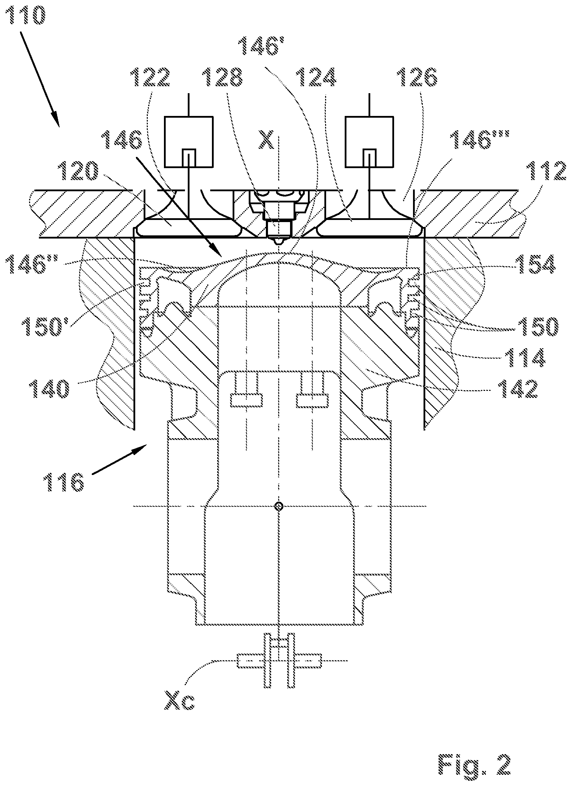

Figure 2 illustrates a cross-section of a piston 116 of the four-stroke internal combustion engine in accordance with a first preferred embodiment of the present invention, the cross-section being taken along a plane defined by the longitudinal axis X of a cylinder and the axis Xc of the crankshaft. For the most part the engine is like the one discussed in connection with Figure 1, for instance, the piston 116 being formed of a piston crown 140 and piston skirt 142. As to shaping of the top surface 146 of the piston crown 140, it may have, among others, the following variations: 1) the raised centre area 146' of the top surface 146 may be rotationally symmetric in relation to the axis X of the piston, 2) the raised centre area 146' may be machined (turned) or by some other appropriate way produced eccentrically such that the axis of symmetry is at a side of the axis X of the piston, either parallel with or inclined to the axis X, 3) the raised centre area 146' may be a circular area, but it may also be an elliptical area, or some other appropriately shaped area, 4) the raised centre area 146' may have a continuous curvature, i.e. having a single centre of curvature, but it may as well be formed of desired combinations of one or more planar and/or curved (even concave and/or convex) surfaces, 5) the top surface 146 may be provided with depressions or pockets for one or more of the valves or there may be no pockets or depressions for the valves in the top surface 146, 6) the bowl area 146" is a depressed annular area having a constant or varying width in the direction of the radius of the piston 116, 7) the edge area 146''' is an annular area having preferably, but not necessarily, a constant width in the direction of the radius of the piston 116, 8) the edge area 146''' is preferably a planar radial surface at right angles to the axis X of the piston 116, however, the edge area 146''' may be slightly inclined in either direction from the radial plane, and 9) the edge area 146''' may also be provided with at least one preferably, but not necessarily, annular groove or depression or at least one preferably, but not necessarily, annular ridge or bulge having an angular or curved cross-section.

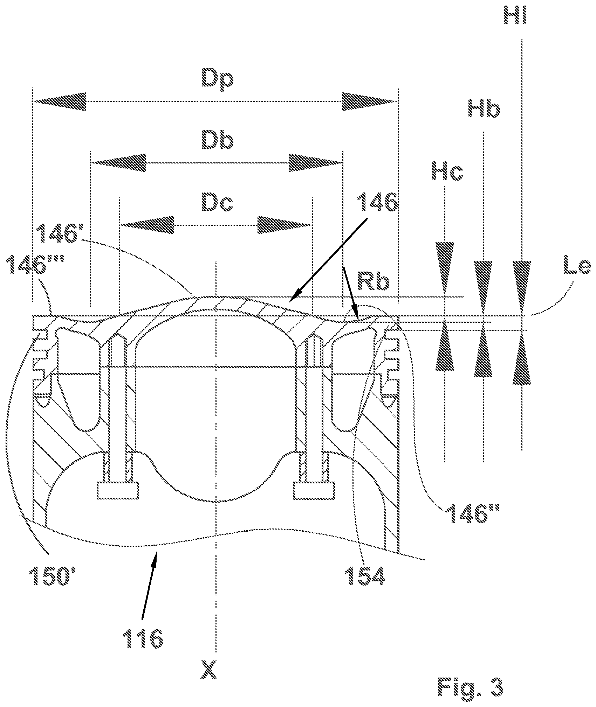

However, there are a few details in the piston 116 that differ from the prior art engines. Firstly, the top surface 146 of the piston crown 140 has been redesigned such that the (raised) centre area 146' of the top surface 146 is raised clearly above the edge area 146''' of the top surface 146. However, the bowl area 146" has maintained its depth, i.e. the bowl bottom is well below the edge area 146''' of the top surface 146. Secondly, the top land 154, i.e. the solid part of the piston between the uppermost piston ring groove 150' and the top surface of the piston at the edge area 146''' is thinner than in prior art constructions, i.e. its dimension in the direction of the longitudinal axis X of the piston 116 is smaller. The dimensioning of the various parts of the top surface 146 and the top land 154 will be discussed in more detail with reference to Figure 3.

Figure 3 illustrates a cross-section of a piston of a four-stroke internal combustion engine 10 in accordance with a first preferred embodiment of the present invention, the cross-section being taken along the longitudinal axis X of the piston. The piston of Figure 3 has a diameter Dp, and the bowl area 146" has a bottom (deepest point of the bowl) located at a diameter Db equalling to 0,6 ... 0,85 * Dp. The depressed bowl area is preferably, but not necessarily, formed of a curved annular surface having a radius Rb in an axial plane equalling to 5 ... 25 % of the piston diameter Dp. The diameter Dc of the raised centre area 146' may vary between 0, 7 ... 0,85 * Db. As to diameter Db it should be understood that it is a more or less average one, as the inner perimeter of the bowl area may not necessarily be exactly circular as the raised centre area 146' of the top surface may have an elliptical or other non-circular and/or non-central (with the piston axis) shape, whereby such may have an effect on the position of the bottom of the bowl area. As to diameter Dc it should be understood that the raised centre area 146' of the top surface may have, in addition to round and central shape, also an elliptical or other non-circular and/or non-central (with the piston axis) shape.

As to the dimensioning of the top surface 146 of the piston crown 140 in the direction of the longitudinal axis X of the piston 116 the edge area 146''' of the top surface 146, more closely the average level of the edge area 146''', is taken as the reference level Le. The average level may be defined as a level half-way between the uppermost and the lowermost (in axial direction) points on the edge area in case the edge area is inclined from the radial plane. Narrow (less than 1/3 of the radial width of the edge area) grooves or ridges in or on the edge area are not considered when determining the average level. The uppermost or axially outermost part of the raised centre area 146' preferably, but not necessarily, at substantially the centre of the top surface 146 extends to above the edge area 146''' at an axial distance Hc from the reference level Le and the bottom of the bowl area 146" is at an axial distance of Hb below the reference level Le. Performed experiments have shown that the depth of the bowl i.e. dimension Hb should be between about 3 ... 10 % of the diameter Dp of the piston 116, and the height Hc of the top of the piston crown 140 between about 3 ... 10 % of the diameter Dp of the piston 116.

Figure 3 also discloses the position of the groove 150' for the uppermost piston ring. The top land 154 between the piston ring groove and the reference level Le has a height or thickness HI, which, in accordance with performed tests, should be between about 3 ... 10 % of the diameter Dp of the piston 116.

By configuring the bowl area 146" and the raised centre area 146' of the piston crown surface 146 in the above described manner, it is possible to position the topmost (compression) piston ring closer to the top surface of the piston, i.e. reduce the height of the top land 154 and thereby reduce HC- emission the engine produces. The reason is that the raised centre area 146' of the piston crown surface directs the combustion flame along the top surface 146 of the piston crown substantially radially outwards and downwards, whereafter the bowl area 146" turns the combustion flame direction gently up towards the cylinder wall and the cylinder head, whereby the combustion flame passes the topmost piston ring and the outermost edge area of the top surface of the piston crown preventing the highest potential thermal and mechanical loads from being subjected to the uppermost piston ring and the radially outermost edge area of the top surface.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. A piston for a large four-stroke internal combustion engine, the piston (116) is formed of a piston crown (140) and a piston skirt (142) fastened to one another; the piston crown (140) having exactly three grooves (150) for piston rings in its outer circumference including a groove (150') for an uppermost piston ring, a top surface (146) and a diameter Dp; the top surface (146) having a centre area (146'), a depressed bowl area (146") and an edge area (146''') at a level Le; the level Le being a reference level at right angles to the longitudinal axis X of the piston (116); the depressed bowl area (146") having a bottom below the level Le of the edge area (146'''), and the centre area is a raised centre area (146') extending above the edge area (146''') at a distance Hc from the reference level Le, the piston crown further having a top land (154) between the groove (150') for the uppermost piston ring and the level Le of the edge area (146'''), **characterized in** the top land (154) having a thickness HI between the groove (150') for the uppermost piston ring and level Le of the edge area (146'''), the thickness HI being 3 ... 10 % of the diameter Dp.

2. The piston as recited in claim 1, **characterized in that** the distance Hc is 3 .. 10 % of the diameter Dp.

3. The piston as recited in any one of the preceding claims, **characterized in that** the bottom of the bowl area (146") is at a distance Hb from the level Le, the distance Hb being 3 ... 10 % of the diameter Dp.

4. The piston as recited in any one of the preceding claims, **characterized in that** the bottom of the bowl area (146") has a diameter Db, the diameter Db equalling to 0,6 ... 0,85 * Dp.

5. The piston as recited in claim 4, **characterized in that** the raised centre area (146') of the top surface (146) has a diameter Dc equalling to 0, 7 ... 0,85 * Db.

6. The piston as recited in any one of the preceding claims, **characterized in that** the depressed bowl area (146") is formed of an annular surface having a radius Rb in an axial plane equalling to 5 ... 25 % of the piston diameter Dp.

7. A large four-stroke internal combustion engine having at least one cylinder head (112), at least one cylinder (114) and a piston (116) in each cylinder (114); the at least one cylinder head (112) having at least one intake valve (120) with an intake channel (122) and at least one exhaust valve (124) with an exhaust channel (126); the engine comprising a piston as recited in any one of the preceding claims.

8. The four-stroke internal combustion engine as recited in claim 7, **characterized in that** the engine is a dual fuel engine or an engine combusting gaseous fuel.

## Patentansprüche

1. Kolben für einen 4-Takt-Verbrennungs-Großmotor, wobei der Kolben (116) aus einem Kolbenboden (140) und einem Kolbenschaft (142) gebildet ist, die aneinander befestigt sind; wobei der Kolbenboden (140) in seinem Außenumfang genau drei Rillen (150) für Kolbenringe, einschließlich einer Rille (150') für einen obersten Kolbenring, eine Oberseite (146) und einen Durchmesser Dp aufweist; wobei die Oberseite (146) einen Mittelbereich (146'), einen vertieften Muldenbereich (146'') und einen Randbereich (146''') auf einer Ebene Le aufweist; wobei die Ebene Le eine Referenzebene in rechten Winkeln zu der Längsachse X des Kolbens (116) ist; wobei der vertiefte Muldenbereich (146'') einen Boden unterhalb der Ebene Le des Randbereichs (146''') aufweist und der Mittelbereich ein erhöhter Mittelbereich (146') ist, der sich in einer Distanz Hc von der Referenzebene Le oberhalb des Randbereichs (146''') erstreckt, wobei der Kolbenboden zwischen der Rille (150') für den obersten Kolbenring und der Ebene Le des Randbereichs (146''') ferner eine obere Anschlussfläche (154) aufweist, **dadurch gekennzeichnet, dass** die obere Anschlussfläche (154) zwischen der Rille (150') für den obersten Kolbenring und der Ebene Le des Randbereichs (146''') eine Dicke Hl aufweist, wobei die Dicke Hl 3 bis 10 % des Durchmessers Dp beträgt.

2. Kolben nach Anspruch 1, **dadurch gekennzeichnet, dass** die Distanz Hc 3 bis 10 % des Durchmessers Dp beträgt.

3. Kolben nach einem der vorhergehenden Ansprüche, **dadurch gekennzeichnet, dass** sich der Boden des Muldenbereichs (146'') in einer Distanz Hb zu der Ebene Le befindet, wobei die Distanz Hb 3 bis 10 % des Durchmessers Dp beträgt.

4. Kolben nach einem der vorhergehenden Ansprüche, **dadurch gekennzeichnet, dass** der Boden des Muldenbereichs (146'') einen Durchmesser Db aufweist, wobei der Durchmesser Db gleich 0,6 bis 0,85*Dp beträgt.

5. Kolben nach Anspruch 4, **dadurch gekennzeichnet, dass** der erhöhte Mittelbereich (146') der Oberseite (146) einen Durchmesser Dc aufweist, der gleich 0,7 bis 0,85 Db ist.

6. Kolben nach einem der vorhergehenden Ansprüche, **dadurch gekennzeichnet, dass** der vertiefte Muldenbereich (146'') aus einer ringförmigen Oberfläche gebildet ist, die in einer axialen Ebene einen Radius Rb aufweist, der gleich 5 bis 25 % des Kolbendurchmessers Dp beträgt.

7. 4-Takt-Verbrennungs-Großmotor, der mindestens einen Zylinderkopf (112) aufweist, mindestens einen Zylinder (114) und einen Kolben (116) in jedem Zylinder (114) aufweist; wobei der mindestens eine Zylinderkopf (112) mindestens ein Ansaugventil (120) mit einem Ansaugkanal (122) und mindestens ein Auslassventil (124) mit einem Auslasskanal (126) aufweist; wobei der Motor einen Kolben nach einem der vorhergehenden Ansprüche umfasst.

8. 4-Takt-Verbrennungsmotor nach Anspruch 7, **dadurch gekennzeichnet, dass** der Motor ein Dual-Fuel-Motor oder ein Motor ist, der gasförmigen Brennstoff verbrennt.

## Revendications

1. Piston pour un grand moteur à combustion interne à quatre temps, le piston (116) comprenant une tête de piston (140) et une jupe de piston (142) fixées l'une à l'autre ; la tête de piston (140) présentant exactement trois rainures (150) pour des segments de piston dans sa circonférence extérieure incluant une rainure (150') pour un segment de piston supérieur, une surface supérieure (146) et un diamètre Dp ; la surface supérieure (146) présentant une zone centrale (146'), une zone en forme de bol renfoncée (146'') et une zone de bord (146''') à un niveau Le ; le niveau Le étant un niveau de référence à des angles droits par rapport à l'axe longitudinal X du piston (116) ; la zone en forme de bol renfoncée (146'') présentant un fond en dessous du niveau Le de la zone de bord (146'''), et la zone centrale est une zone centrale surélevée (146') s'étendant au-dessus de la zone de bord (146''') à une distance Hc du niveau de référence Le, la tête de piston présentant en outre une couronne de piston (154) entre la rainure (150') pour le segment de piston supérieur et le niveau Le de la zone de bord (146'''), **caractérisé en ce que** la couronne de piston (154) présente une épaisseur H1 entre la rainure (150') pour le segment de piston supérieur et le niveau Le de la zone de bord (146'''), l'épaisseur H1 mesurant entre 3% et 10% du diamètre Dp.

2. Piston selon la revendication 1, **caractérisé en ce que** la distance Hc mesure entre 3% et 10% du diamètre Dp.

3. Piston selon l'une quelconque des revendications précédentes, **caractérisé en ce que** le fond de la zone en forme de bol (146'') se trouve à une distance Hb du niveau Le, la distance Hb mesurant entre 3% et 10% du diamètre Dp.

4. Piston selon l'une quelconque des revendications précédentes, **caractérisé en ce que** le fond de la zone en forme de bol (146'') présente un diamètre Db, le diamètre Db mesurant entre 0,6 et 0,85 * Dp.

5. Piston selon la revendication 4, **caractérisé en ce que** la zone centrale surélevée (146') de la surface supérieure (146) présente un diamètre Dc mesurant entre 0,7 et 0,85 * Db.

6. Piston selon l'une quelconque des revendications précédentes, **caractérisé en ce que** la zone en forme de bol renfoncée (146'') est formée par une surface annulaire présentant un rayon Rb dans un plan axial, lequel mesure entre 5% et 25% du diamètre de piston Dp.

7. Grand moteur à combustion interne à quatre temps, présentant au moins une tête de cylindre (112), au moins un cylindre (114) et un piston (116) dans chaque cylindre (114) ; l'au moins une tête de cylindre (112) présentant au moins une soupape d'admission (120) avec un canal d'admission (122) et au moins une soupape d'échappement (124) avec un canal d'échappement (126) ; le moteur comprenant un piston selon l'une quelconque des revendications précédentes.

8. Moteur à combustion interne à quatre temps selon la revendication 7, **caractérisé en ce que** le moteur est un moteur hybride ou un moteur de combustion de carburant gazeux.
